(19) Europäisches Patentamt
European Patent Office
Office européen des brevets

(11) Numéro de publication : **0 374 037 B1**

# (12) FASCICULE DE BREVET EUROPEEN

(45) Date de publication du fascicule du brevet :
**30.10.91 Bulletin 91/44**

(51) Int. Cl.⁵ : **B60S 11/00**

(21) Numéro de dépôt : **89403454.5**

(22) Date de dépôt : **13.12.89**

---

(54) **Appui de cric pour véhicule automobile.**

---

(30) Priorité : **16.12.88 FR 8817358**

(43) Date de publication de la demande :
**20.06.90 Bulletin 90/25**

(45) Mention de la délivrance du brevet :
**30.10.91 Bulletin 91/44**

(84) Etats contractants désignés :
**DE GB IT**

(56) Documents cités :
**DE-A- 1 530 787**
**DE-C- 3 627 892**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Guinois, Pascal**
**111, rue de la Libération**
**F-94680 Bruyeres-Le-Chatel (FR)**

(74) Mandataire : **Boivin, Claude**
**9, rue Edouard-Charton**
**F-78000 Versailles (FR)**

EP 0 374 037 B1

Jouve, 18, rue Saint-Denis, 75001 PARIS

## Description

Dans certains types de véhicule, on peut être amené, par exemple par suite de la forme stylisée de la carrosserie ou de contraintes d'ordre technique, à concevoir un appui de cric qui a une forme inesthétique et/ou se trouve à un endroit où il est très apparent.

La présente invention a pour objet un appui de cric comportant au moins un emplacement pour un cric et perfectionné de manière à remédier à cet inconvénient.

L'appui de cric selon l'invention est caractérisé par un caché mobile le long de l'appui entre une position de repos dans laquelle il camoufle l'emplacement de cric et au moins une position de travail dans laquelle l'accès à cet emplacement est libéré.

Dans un mode de réalisation particulier de l'invention, l'appui de cric est fixé à un bas de caisse et le cache en position de repos camoufle la partie de l'appui de cric située en dessous du bas de caisse.

On a décrit ci-après, à titre d'exemple non limitatif, un mode de réalisation de l'appui de cric selon l'invention, avec référence au dessin annexé dans lequel :

La Figure 1 est une vue en coupe de l'appui de cric et de son cache ;

Les Figures 2 à 4 sont des vues en élévation du cache étant respectivement en position de repos, en position d'utilisation du cric, et en position de réparation en garage.

Au dessin, on voit un appui de cric 1 qui est fixé à un bas de caisse 2 en faisant saillie par rapport à ce bas de caisse. Cet appui comporte un logement 3 destiné à recevoir la tête d'un cric 4 et une surface d'appui 5 pour une chandelle de garage 6.

L'appui de cric 1 est constitué par un profilé comportant une aile verticale et une aile horizontale inférieure dirigée vers l'intérieur du véhicule. Sur cet appui de cric 1 est monté coulissant un cache 7 constitué par un profilé délimitant une gouttière dans laquelle l'appui de cric est engagé. La face interne du cache 7 comporte une nervure interne 8 alors que le bord d'extrémité 9 du cache est replié vers l'intérieur de la gouttière et constitue une deuxième nervure ; l'appui de cric 1 est pincé entre les deux nervures 8 et 9.

La nervure 8 présente deux doigts en saillie 8a et 8b écartés l'un de l'autre et pouvant s'engager, le premier dans un trou 10 de l'appui de cric 1 et le second dans le logement 3 ; ces doigts sont disposés à la hauteur du logement 3 et leur écart est égal à celui existant entre le trou 10 et ce logement 3.

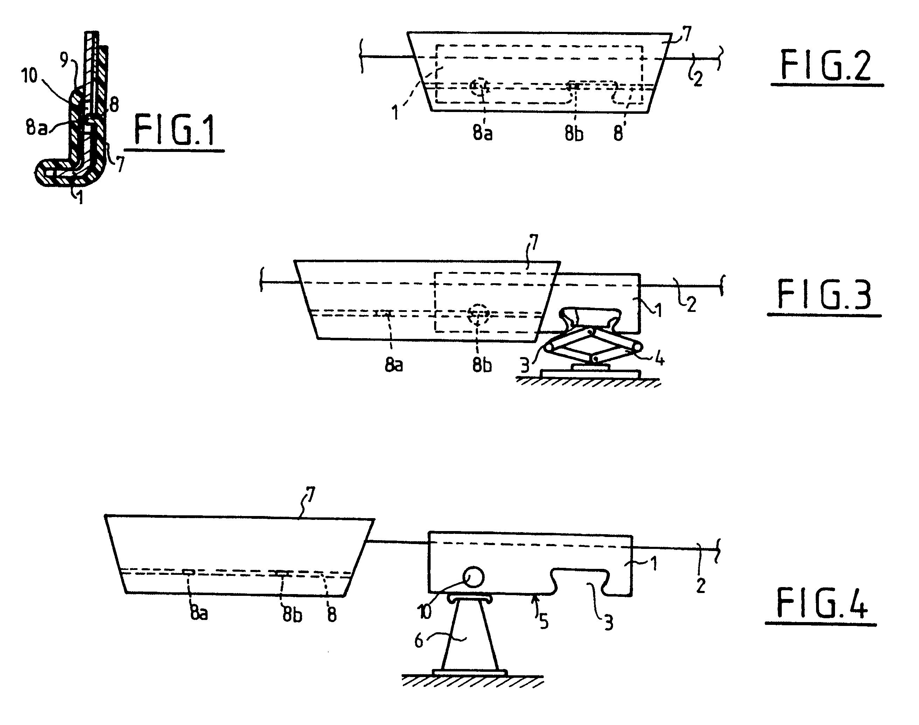

La Figure 2 montre la position normale du cache. Les doigts 8a et 8b sont engagés respectivement dans le trou 10 et dans le logement 3, en maintenant le cache 7 dans une position dans laquelle il masque l'appui de cric 1.

En exerçant une traction sur le bord supérieur du cache 7, on dégage les doigts 8a et 8b du trou 10 et du logement 3, ce qui permet de le déplacer transversalement et de l'amener dans la position de la Figure 3. Le doigt 8b est alors engagé dans le trou 10 et le logement 3 est découvert, ce qui permet la mise en place du cric 4.

En opérant de manière analogue, on peut extraire totalement le cache de l'appui de cric 1 (Figure 4), ce qui permet l'utilisation de la chandelle 6.

## Revendications

1. Appui de cric (1) pour véhicule automobile comportant au moins un emplacement (3) pour un cric (4) et caractérisé par un cache (7) mobile le long de l'appui entre une position de repos dans laquelle il camoufle l'emplacement de cric (3) et au moins une position de travail dans laquelle l'accès à cet emplacement est libéré.

2. Appui de cric selon la revendication 1, caractérisé en ce que le cache (7) est porté directement par lui.

3. Appui de cric selon la revendication 1 ou 2, caractérisé en ce qu'il est fixé à un bas de caisse (2) et en ce que le cache (7) en position de repos camoufle la partie de l'appui de cric située en dessous du bas de caisse.

4. Appui de cric selon la revendication 2 ou 3, caractérisé en ce que le cache (7) est monté coulissant sur l'appui de cric et en ce qu'il est prévu des moyens pour immobiliser le cache dans sa position de repos.

5. Appui de cric selon la revendication 4, caractérisé en ce que les moyens d'immobilisation du caché comprennent au moins un doigt (8a ou 8b) prévu sur le cache ou l'appui de cric et apte à pénétrer dans un trou (10) ou une échancrure (3) de l'appui de cric ou du cache.

6. Appui de cric selon l'une des revendications précédentes, caractérisé par deux nervures (8 et 9) prévues sur le cache et aptes à pincer entre elles une tôle de l'appui de cric.

7. Appui de cric selon les revendications 5 et 6, caractérisé en ce que le doigt (8a ou 8b) fait partie intégrante de l'une (8) des nervures.

8. Appui de cric selon l'une des revendications précédentes, caractérisé en ce qu'il comporte un premier emplacement (3) pour le cric (4) équipant le véhicule et un deuxième emplacement (5) pour un cric tel qu'une chandelle de garage (6) et en ce que le cache (7) a une première position de travail dans laquelle seul l'accès au premier emplacement (3) est libéré et une deuxième position de travail dans laquelle les accès aux deux emplacements (3, 5) sont libérés.

9. Appui selon la revendication 8, caractérisé en ce que la deuxième position de travail est une position dans laquelle le cache (7) est situé totalement à l'extérieur de l'appui de cric.

10. Appui de cric selon les revendications 5 et 8, caractérisé en ce que le cache ou l'appui de cric comprend un premier doigt et un deuxième doigt (8a et 8b) se trouvant en position respectivement dans un premier trou (3) et un deuxième (10) de l'appui de cric ou du cache, le premier doigt (8b) se trouvant dans le deuxième trou (10) lorsque le cache est dans la première position de travail.

## Patentansprüche

1. Wagenheberabstützeinrichtung (1) für ein Kraftfahrzeug mit mindestens einer Auflagerstelle (3) für einen Wagenheber (4), gekennzeichnet durch eine Abdeckung (7), die entlang der Abstützeinrichtung zwischen einer Ruhestellung, in welcher sie die Auflagerstelle (3) für den Wagenheber verdeckt, und mindestens einer Arbeitsstellung, in welcher der Zugang zu dieser Auflagerstelle freigegeben ist, bewegbar ist.

2. Wagenheberabstützeinrichtung nach Anspruch 1, dadurch gekennzeichnet, daß die Abdeckung (7) direkt von ihr getragen ist.

3. Wagenheberabstützeinrichtung nach Anspruch 1 oder 2, dadurch gekennzeichnet, daß sie am Karosserieboden (2) befestigt ist, und daß die Abdeckung (7) in der Ruhestellung die unterhalb des Karosseriebodens gelegene Abstützstelle für den Wagenheber verdeckt.

4. Wagenheberabstützeinrichtung nach Anspruch 2 oder 3, dadurch gekennzeichnet, daß die Abdeckung (7) verschiebbar an der Wagenheberabstützeinrichtung montiert ist und daß Mittel zum Festlegen der Abdeckung in ihrer Ruhestellung vorgesehen sind.

5. Wagenheberabstützeinrichtung nach Anspruch 4, dadurch gekennzeichnet, daß die Mittel zum Festlegen der Abdeckung mindestens einen Finger (8a oder 8b) aufweisen, der an der Abdeckung oder an der Wagenheberabstützeinrichtung angeordnet und dazu fähig ist, in ein Loch (10) oder eine Aussparung (3) der Wagenheberabstützeinrichtung oder der Abdeckung einzugreifen.

6. Wagenheberabstützeinrichtung nach einem der vorhergehenden Ansprüche, gekennzeichnet durch zwei Rippen (8 und 9), die an der Abdeckung angeordnet und dazu fähig sind, ein Blech der Wagenheberabstützeinrichtung zwischen sich einzuklemmen,

7. Wagenheberabstützeinrichtung nach den Ansprüchen 5 und 6, dadurch gekennzeichnet, daß der Finger (8a oder 8b) als ein integrierter Bestandteil einer der Rippen (8) ausgebildet ist.

8. Wagenheberabstützeinrichtung nach einem der vorhergehenden Ansprüche, dadurch gekennzeichnet, daß sie eine erste Auflagerstelle (3) für den Wagenheber (4) aufweist, mit dem das Kraftfahrzeug ausgerüstet ist, und eine zweite Auflagerstelle (5) für einen Wagenheber wie eine Garagenstütze (6) und daß die Abdeckung (7) eine erste Arbeitsstellung besitzt, in welcher nur der Zugang zur ersten Auflagerstelle freigegeben ist, und eine zweite Arbeitsstellung, in welcher der Zugang zu beiden Auflagerstellen (3, 5) freigegeben ist.

9. Wagenheberabstützeinrichtung nach Anspruch 8, dadurch gekennzeichnet, daß die zweite Arbeitsstellung eine Stellung ist, in welcher die Abdeckung (7) vollständig außerhalb der Wagenheberabstützeinrichtung liegt.

10. Wagenheberabstützeinrichtung nach den Ansprüchen 5 und 8, dadurch gekennzeichnet, daß die Abdeckung oder die Wagenheberabstützeinrichtung einen ersten Finger und einen zweiten Finger (8a und 8b) aufweisen, die sich jeweils in einer Stellung in einem ersten Loch (3) und einem zweiten Loch (10) der Wagenheberabstützeinrichtung oder der Abdeckung befinden, wobei der erste Finger (8b) sich im zweiten Loch (10) befindet, wenn die Abdeckung sich in der ersten Arbeitsstellung befindet.

## Claims

1. Jack support (1) for an automotive vehicle and comprising at least one location (3) for a jack (4) and characterized by a cover (7) able to move along the support between one rest position in which it camouflages the location of the jack (3) and at least one working position in which access to this location is made available.

2. Jack support according to claim 1, wherein the cover (7) is directly borne by said support.

3. Jack support according to claim 1 or 2, wherein it is fixed to a car body bottom (2) and wherein the cover (7) is its rest position camouflages the portion of the jack support situated beneath the car body bottom.

4. Jack support according to claim 2 or 3, wherein the cover (7) is mounting sliding on the jack support and wherein means are provided to keep the cover fixed in its rest position.

5. Jack support according to claim 4, wherein the jack immobilization means include at least one finger (8a or 8b) provided on the cover or the jack support and able to penetrate into a hole (10) or notch (3) of the jack support or of the cover.

6. Jack support according to any one of the preceding claims, wherein two ribs (8 and 9) are provided on the cover and are able to clamp between them a steel plate of the jack support.

7. Jack support according to claims 5 and 6, wherein the finger (8a or 8b) forms an integral part of one (8) of the ribs.

8. Jack support according to any one of the preceding claims, wherein it comprises a first location (3) for the jack (4) equipping the vehicle and one second location (5) for a jack, such as a garage prop (6) and wherein the cover (7) has one first working position in which access solely to the first location is made available and one second working position in which access to the two locations is made available.

9. Support according to claim 8, wherein the second working position is a position in which the cover (7) is situated completely outside the jack support.

10. Jack support according to claims 5 and 8, wherein the cover or the jack support includes one first finger and one second finger (8a and 8b) located in respectively one first hole (3) and one second hole (10) of the jack support or cover, the first finger (8b) being located in the second hole (10) when the cover is in the first working position.

FIG.1

FIG.2

FIG.3

FIG.4